# EUROPEAN PATENT SPECIFICATION

(11) **EP 1 882 250 B1**
(45) Date of publication and mention of the grant of the patent: **16.03.2016**
(21) Application number: 06759859.9
(22) Date of filing: 16.05.2006
(51) Int. Cl.: H04L 12/54, H04L 29/06, H04L 12/911, H04L 12/919, H04L 12/927, H04L 12/801, H04L 12/913, H04L 12/923, H04L 29/08

(54) **SDP WEB SERVICES INTERFACE**
SDP-WEB-DIENSTESCHNITTSTELLE
INTERFACE DE SERVICES WEB SDP

(30) Priority: 16.05.2005 US 681329 P
(43) Date of publication of application: 30.01.2008
(73) Proprietor: Camiant, Inc., Marlborough, MA 01752 (US)
(72) Inventor: MEDLOCK, James, Harvard, MA 01451 (US); ABOU-ASSALI, Tarek, Boston, MA 0211 (US); RILEY, Yusun, Kim, Marlborough, MA 01762 (US)
(74) Representative: Gill Jennings & Every LLP
(86) International application number: PCT/US2006/018758
(87) International publication number: WO 2006/124790

(56) References cited:
- WO-A1-2004/112335
- US-A1- 2002 184 346
- US-A1- 2003 088 421
- US-A1- 2004 170 156
- US-A1- 2005 073 997
- US-B1- 6 714 987
- MARSHALL AT&T M OSMAN CABLELABS F ANDREASEN CISCO D EVANS ARRIS W: "Architectural Considerations for Providing Carrier Class Telephony Services Utilizing Session Initiation Protocol (SIP)-based Distributed Call Control Mechanisms; draft-dcsgroup-sipping-arch-01.txt" IETF STANDARD-WORKING-DRAFT, INTERNET ENGINEERING TASK FORCE, IETF, CH, no. 1, 15 January 2003 (2003-01-15), XP015000684 ISSN: 0000-0004
- GOULART A E P ET AL: "On overlapping resource management and call setup signaling: a new signaling approach for internet multimedia applications" COMPUTER COMMUNICATIONS, ELSEVIER SCIENCE PUBLISHERS BV, AMSTERDAM, NL LNKD- DOI:10.1016/J.COMCOM.2004.11.006, vol. 28, no. 8, 16 December 2004 (2004-12-16), pages 851-863, XP025273366 ISSN: 0140-3664 [retrieved on 2005-05-16]

## Description

### TECHNICAL FIELD

The present invention relates generally to policy-based network resource management.

### BACKGROUND OF THE INVENTION

In general, a policy server manages network assets according to a set of rules, i.e., a policy. While some policy servers simply carve out network resources (e.g., from router A to router B, an application-based policy server manages network assets with respect to a particular application. For example, in a Voice over Internet Protocol (VoIP) application, two network endpoints may wish to establish a VoIP call with one another via the network. The network endpoints request network assets from the policy server for the VoIP call. The policy server extracts policy-related information from the request, and assigns network assets accordingly.

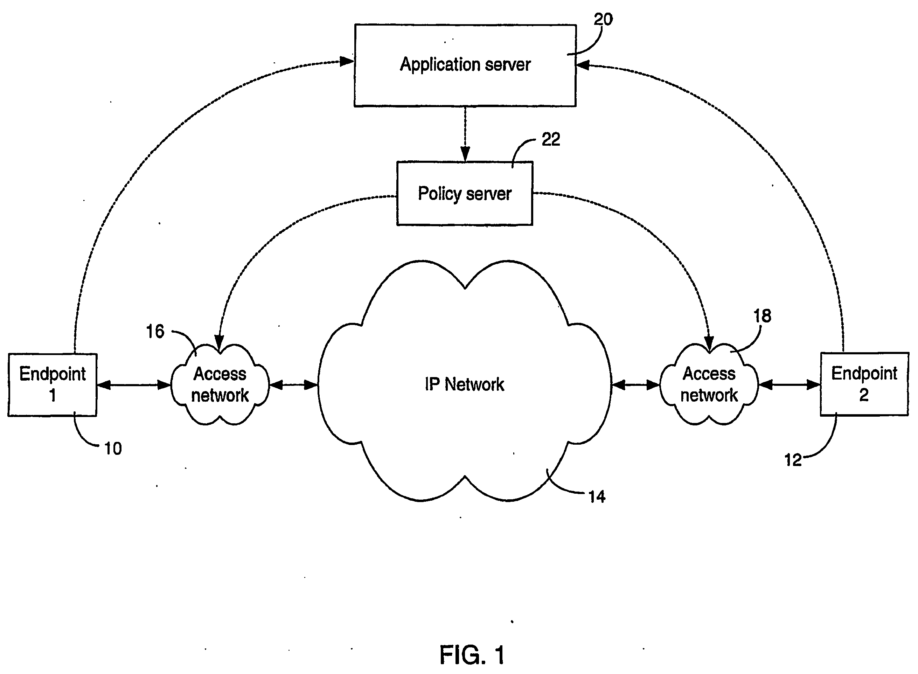

FIG. 1 shows one way to implement this VoIP example. A first network endpoint 10 wishes to establish a VoIP call to a second network endpoint 12 via an IP network 14. The first network endpoint 10 connects to the IP network 14 through a first access network 16, and the second network endpoint 12 connects to the IP network 14 through a second access network 18. The first endpoint 10 requests network assets via a request 16 to an application server 20 using, for this example, Session Initiation Protocol (SIP), although other protocols may be used. The application server 20 hosts the VoIP application that the endpoints will use to implement the call. The application server 20 relays the SIP request for a VoIP call to a policy server 22. The application server 20, through the policy server 22, arranges for a particular Quality of Service (QoS) level in the access networks 16 and 18 necessary to implement the VoIP call.

The arrangement described above requires the application server 18 to maintain the state of the SIP call (i.e., keep track of the actions associated with the call), along with all of the underlying network resources involved in the call. Thus, the application server 18 is required to be "stateful."

WO2004/112335 relates to a PCMM application manager.

### SUMMARY OF THE INVENTION

An aspect is set out in the appended claim 1.

Another aspect is set out in the appended claim 7.

### BRIEF DESCRIPTION OF DRAWINGS

FIG. 1 shows a prior art architecture for establishing a VoIP link between two network endpoints.
FIG. 2 shows the described embodiment for allocating network assets for communication between network endpoints.
FIG. 3 shows the possible error codes returned by the SIP PM in the described embodiment.
FIGs. 4A and 4B show an exemplary call flow diagram for an on-net successful call.
FIG. 5 shows an exemplary call flow diagram for an on-net unsuccessful call.
FIG. 6 shows an exemplary call flow diagram for an off-net call.
FIG. 7 shows an exemplary call flow diagram for a call hold, after the call has been connected.
FIG. 8 shows an exemplary call flow diagram for when media is added/removed successfully.
FIG. 9 shows an exemplary call flow diagram for when media is added/removed unsuccessfully.
FIG. 10 shows an exemplary call flow diagram for when the additional media requested will not be granted QoS.
FIG. 11A, 11B, 11C and 11D show an exemplary call flow diagram for forked call.
FIGs. 12A and 12B describe how the SIP PM handles 3pcc call flow I, as described in RFC 3725.
FIGs. 13A and 13B describe how the SIP PM handles 3pcc call flow II, as described in RFC 3725.
FIGs. 14A, 14B and 14C describe how the SIP PM handles 3pcc call flow III, as described in RFC 3725.

### DETAILED DESCRIPTION

The described embodiment is a network architecture that uses a SIP Protocol Module (SIP PM) in conjunction with a QoS-enabled SIP proxy server to establish, maintain and terminate QoS resources in the access networks, for network endpoints that wish to communicate via the network. The SIP PM abstracts the procedures and functionality necessary to implement SIP communication sessions away from the application server, so that the application server does not need to be involved with the intricacies of those sessions.

This embodiment describes two endpoints implementing a high quality video teleconference session, although these concepts can apply also to other applications, such as video streaming, Voice over Internet Protocol (VoIP) communications, and networked gaming.

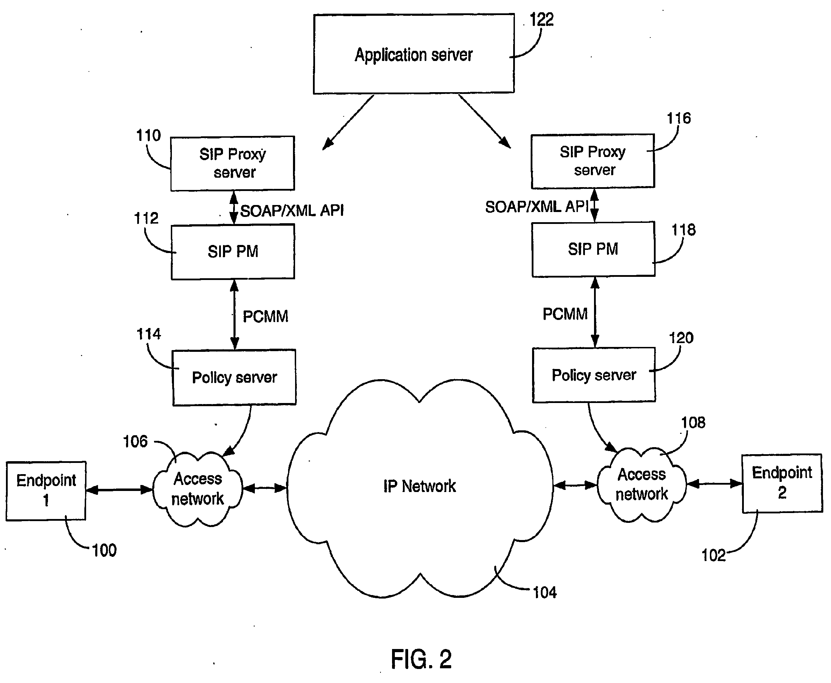

FIG. 2 shows the described embodiment, including a first network endpoint 100, a second network endpoint 102, an IP network 104, a first access network 106 and a second access network 108. In this embodiment, the first network endpoint 100 implements a video teleconference session with the second network endpoint 102 through the access networks 106, 108 and the IP network 104.

The embodiment in FIG. 2 further includes a first SIP proxy server 110, a first SIP protocol module (SIP PM) 112 and a first policy server 114. These three components operate together to reserve and maintain QoS resources in the first access network 106 for the first network endpoint 100.

The embodiment in FIG. 2 also includes a second SIP proxy server 116, a second SIP protocol module (SIP PM) 118 and a second policy server 120. These three components operate together to reserve and maintain QoS resources in the second access network 108 for the second network endpoint 102. The operation of these three components is essentially identical to that of the corresponding components associated with the first network endpoint 100, as described below.

An application server 122 hosts the video teleconference application that the network endpoints 100, 102 will use to implement the call.

The first SIP proxy server 116 communicates with the SIP PM via a Simple Object Access Protocol/eXtensible Markup Language (SOAP/XML) Application Programming Interface (API). This interface is also referred to herein as a Web Services Interface (WSI). The SOAP/XML API enables the SIP Proxy Server 116 to request QoS requirements in the access network 106 based on the Session Description Protocol (SDP) parameters contained in the call setup offer and answer, as defined in RFC 3264 ("An Offer/Answer Model with the Session Description Protocol (SDP)," IETF.RFC 3264). The SIP PM 112 uses the CableLabs PacketCable Multimedia (PCMM) protocol (PKT-TR-MM-ARCH-V01-030627, V01, June 27, 2003) to communicate those requirements to the policy server 114.

To establish the video teleconference session, the first network endpoint 100 attempts to signal the second network endpoint 102 to convey its intention to set up a session. The first network endpoint 100 sends an "INVITE" message to its SIP proxy server 110. The first SIP proxy server 110 then invokes the SOAP/XML API to reserve resources via the first SIP PM for the first network endpoint 100, and forwards the "INVITE" to the domain of the second network endpoint 102. A policy server 114 in the domain of the second network endpoint allocates the necessary network resources. The allocated network resources may include QoS.

Once the "INVITE" reaches the second SIP proxy server 116 associated with the second network endpoint 102, the second SIP proxy server 116 signals to the second SIP PM 118 that resources need to be reserved through a policy server 120 for the second network endpoint 102. This reservation is based initially on an estimation of resources required using the SDP (i.e., the offer) of the first network endpoint 100. The "INVITE" is then forwarded to the second network endpoint 102.

When the second network endpoint 102 answers the call, a "200 OK" message is sent back to the first network endpoint 100. During this process, the SIP proxy servers 110, 116 in both domains commit the previously reserved QoS, which is modified to reflect any changes in requirements based on the SDP (i.e., the answer) of the second network endpoint 102.

Each SIP PM 112, 118 interprets the SDP messages for both UAs, parsing the SDP messages and reading the associated media information, including the media type, media codecs, source and destination IP addresses and ports, and then formulates a PCMM "GateSet" message for the its respective network endpoint.

In this embodiment, each SIP proxy server (110, 116) is responsible for communicating with its respective SIP PM (112, 118), if at least one of the network endpoints involved in the session is the responsibility of that SIP proxy server. Intermediary proxies along the signaling path, which are not responsible for the network endpoints involved in the session, are not required to communicate with a SIP PM. Each SIP Proxy must signal its respective SIP PM with the offer and answer, as both are needed to completely ascertain the capabilities of the network endpoints.

For each network endpoint, the associated SIP PM creates two PCMM gates per media type, one in the upstream and one in the downstream direction. In the described embodiment, the network endpoints 100, 102 are SIP videophones. The SDP for these network endpoints can include two media types: audio and video. For each network endpoint, the SIP PM thus creates a total of four PCMM gates:
- An upstream gate for audio;
- A downstream gate for audio;
- An upstream gate for video; and,
- A downstream gate for video.

When the session is terminated, the terminating network endpoint sends a "BYE" message to the other network endpoint through their associated SIP proxy servers. As the "BYE" message traverses through each proxy server, that proxy server sends a release QoS message to the SIP PM. The release QoS message sends PCMM GateDeletes for gates that were created during the session setup, clearing the service flows that were set up earlier for the network endpoints.

### SOAP/XML API SPECIFICATION

The API characteristics of the SIP PM for the described embodiment are described below in terms of (1) API return status codes, (2) PartyInfo parameter type, and (3) API functions. The SOAP/XML API provides both a single-phase as well as two-phase reserve/commit functionality. The operator controls the mode of operation, but by default operates in two-phase commit mode where a resource is "reserved" on the cable modem termination system (CMTS), and then "committed" when the called party answers.

### API Return Status Codes

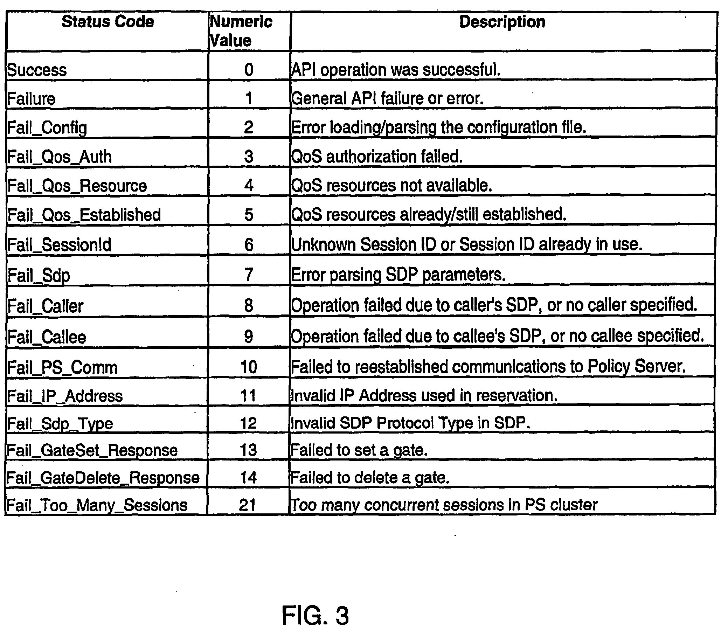

The table shown in FIG. 3 describes the possible error codes returned by the SIP PM. Status Codes are used to indicate the success or failure, and the reason for the failure of the API operation.

Other embodiments include further detail required for failed operations, for example to identify the particular media line causing a gate operation to fail. This information could be returned as a sub-code to one of the codes shown in FIG. 3, or as an additional code.

### PartyInfo Parameter Type

In PCMM and on a CMTS, QoS information for media flows is conveyed/stored in an object called a Gate. A Gate is associated with a subscriber identifier, which is either the active cable modem or customer provided equipment (CPE) IP address. The CMTS and the subscriber's cable modem filter traffic onto the flow associated with the Gate by using a traffic classifier. The classifier is defined by specifying source and destination IP addresses and ports.

Within the SIP PM API, a parameter describing the endpoint of a SIP session is used to configure the PCMM Gate as well as to provide information used in the execution of business policies and generation of billing events. This parameter is defined as the object class, "PartyInfo," and contains the following fields:

```
             PartyInfo {
                       string id;
                       string sdp;
                      boolean qosEnabled;
                      string ipAddress;
                       }
```

Each of these parameters is defined as follows:
id: This is a unique identifier for a subscriber. Its format will be: user@domain (i.e. alice@comcast.net). This id MUST be the same for a particular subscriber, no matter what location he/she is at when making/receiving calls. If this field is empty, this PartyInfo will still be accepted as long as the SDP is present (which will allow the SIP PM to uniquely identify the session description of a party within a dialog as defined in RFC 2327 [Session Description Protocol: IETF RFC 2327]). This identifier only needs to be provided in the first API call for a dialog. This field is used, for example, for nomadic users.
sdp: This is the SDP contained in the offer/answer. If not available, this field defaults to an empty string.
qosEnabled: This is a boolean flag (i.e., true/false) that informs the SIP PM whether or not this party is within the responsibility domain of the EP and if it is a QoS enabled party(from the EP's perspective). For instance, for a guest, this flag will be set to false, similarly for a party not within the responsibility domain of the EP, this flag will be false. Once this flag is set to true within a session, it will remain as true for the remainder of the session.
ipAddress: This is the IP address (dotted decimal notation) of the party initiating/receiving a call (this parameter could be used in the subscriber-id field of a PCMM message only in the case where no SDP is available). If not available or not needed (i.e., enough info is in the SDP), this field should default to an empty string.

For functions requiring information about a number of session endpoints, an array of PartyInfo objects should be provided.

### API Functions

The description below provides details on the SOAP/XML RPC Interface exposed by the QBUS SIP PM.

**int reserveQos -** This method is called when the SIP proxy server receives a SIP INVITE message, and is used by the SIP PM to initially reserve resources in the access network, ensuring that those resources are available when the network endpoint being called ultimately answers the call. Using this interface, the SIP proxy server has the opportunity to signal back to the caller if QoS is not available in the case where the operator wishes to block calls that will not have associated QoS resources (i.e., a configurable option).

The following provides the proper syntax and parameters for this function:

```
       int reserveQos(
                   string sessionId,
                   PartyInfo[] parties,
                   boolean e911)
```

### Parameters:

### SessionId - call-id SEMICOLON from-tag [SEMICOLON to-tag]

The call-id, from-tag and to-tag MUST be extracted from the corresponding SIP headers fields. If the to-tag is not present in the SIP message, the SessionId will only contain the call-id and the from-tag. Because the to and from-tags can be reversed (depending on which endpoint is issuing a request), it is the responsibility of the SIP PM to match SessionIds with the same call-id and same (from-tag,to-tag) pair. For example, the two following SessionIds are equivalent:
123456-00e0953431 @ 151.104.2.3;590432;276439
123456-00e0953431 @ 151.104.2.3;276439;590432
parties - an array that contains information regarding the parties in the call as described in the previous section.
e911- a boolean flag indicating if this call is an emergency call. The SIP PM will make sure that the reservation succeeds for these types of calls (even if it has to delete established QoS on other existing calls). By default, this flag is false. It is not mentioned in the remainder of the document as it is assumed "false" in the described scenarios.

### Return Value:

### Status Code

**int commitQos** - When the Callee answers and the terminating proxy server receives the 200 OK, it will send a commitQos( ) request to the SIP PM including the called party SDP. At this stage, the SIP PM has all the info it needs and will commit resources by changing the state of PCMM gates from reserved to committed as well as adjusting the classifiers and QoS resources. Given that resources were reserved at the call initiation stage, the commitment of the resources should succeed (as long as the committed resources do not exceed the reserved ones).

The following provides the proper syntax and parameters for this function:

```
         int commitQos(
              string sessionId,
              PartyInfo[] parties)
```

### Parameters:

### SessionId - call-id SEMICOLON from-tag [SEMICOLON to-tag]

The call-id, from-tag and to-tag MUST be extracted from the corresponding SIP headers fields. If the to-tag is not present in the SIP message, the SessionId will only contain the call-id and the from-tag. Because the to and from-tags can be reversed (depending on which endpoint is issuing a request), it is the responsibility of the SIP PM to match SessionIds with the same call-id and same (from-tag,to-tag) pair. For example, the two following Sessionlds are equivalent:
123456-00e0953431 @151.104.2.3;590432;276439
123456-00e0953431 @151.104.2.3;276439;590432
parties - array as defined above (in this case it will contain the called party's information). It is defined as an array although in all cases described in the document it is an array of length 1. The reason it is an array is in case this interface is between a back-to-back user agent and a SIP PM and the back-to-back user agent would like to provide information about multiple parties in one API call.

### Return Value:

### Status Code

**int releaseQos -** This function releases all QoS resources for the specified session. Typically this function is called when the SIP Proxy receives a BYE message from one of the end points.

The following provides the proper syntax and parameters for this function:

```
       int releaseQos(
                   string sessionId)
```

### Parameters:

**SessionId -** the sessionId used in the previous releaseQos() and commitQos() method calls.

### Return Value:

### Status Code

**string getVersion -** This function returns the version string of the QBUS SIP PM. The following provides the proper syntax and parameters for this function:

```
         string getVersion()
      Parameters:
            None
      Return Value:
            Version string.
```

### Call Flow Examples

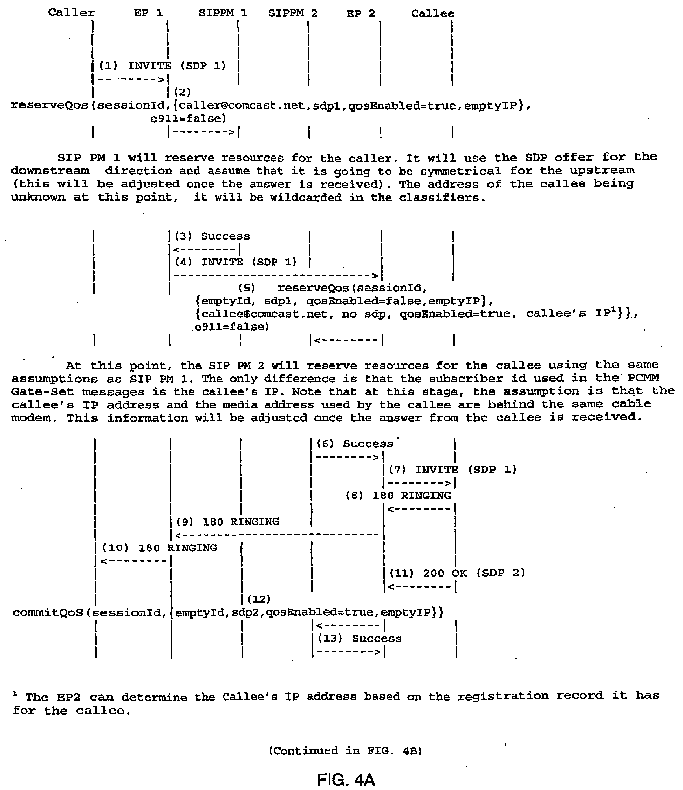

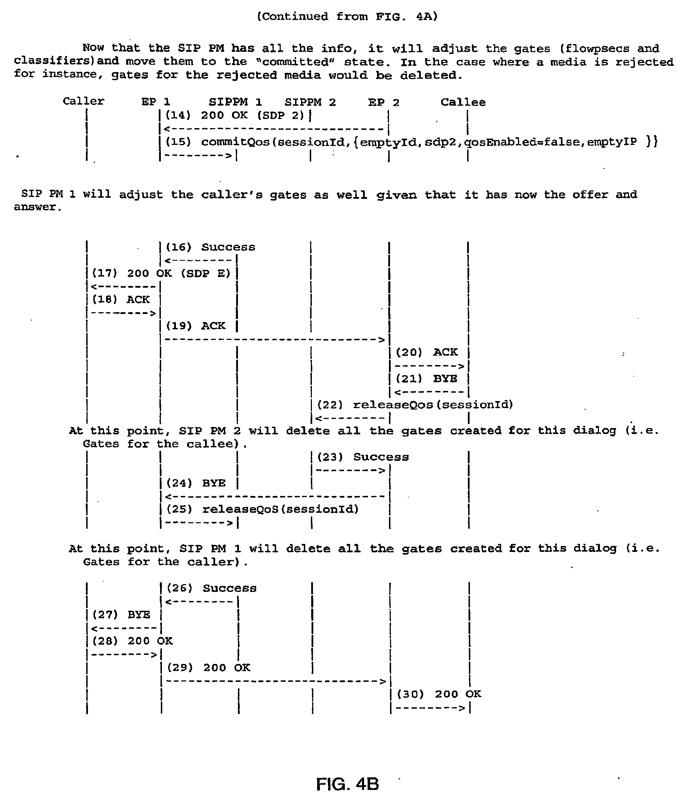

FIGs. 4 through 14 show SIP call flow for on-net, off-net, call hold, re-invites, forked calls and 3PCC scenarios. Each call flow shows both the SIP message exchange as well as SIP PM API calls.

FIGs. 4A and 4B show an exemplary call flow diagram for an on-net successful call. In this diagram, the correspondence with the components shown in FIG. 2 is as follows: the "caller" corresponds to the first network endpoint 100, the "callee" corresponds to the second network endpoint 102, "EP 1" corresponds to the first SIP proxy server 110, "EP 2" corresponds to the second SIP proxy server 116, "SIPPM 1" corresponds to the first SIP PM 112, and "SIPPM 2" corresponds to the second SIP PM 118.

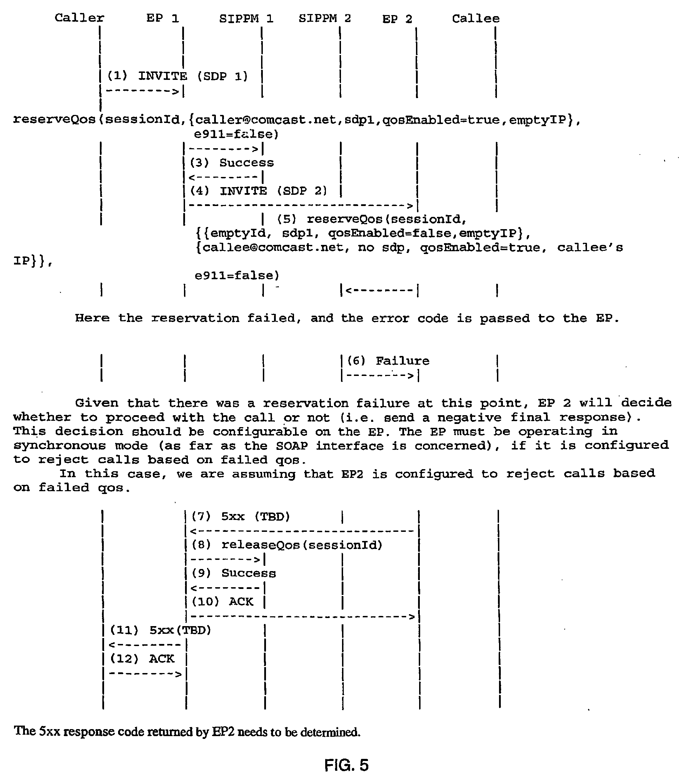

FIG. 5 shows an exemplary call flow diagram for an on-net unsuccessful call. The correspondence with the components shown in FIG. 2 is the same as that described above for FIGs. 4A and 4B.

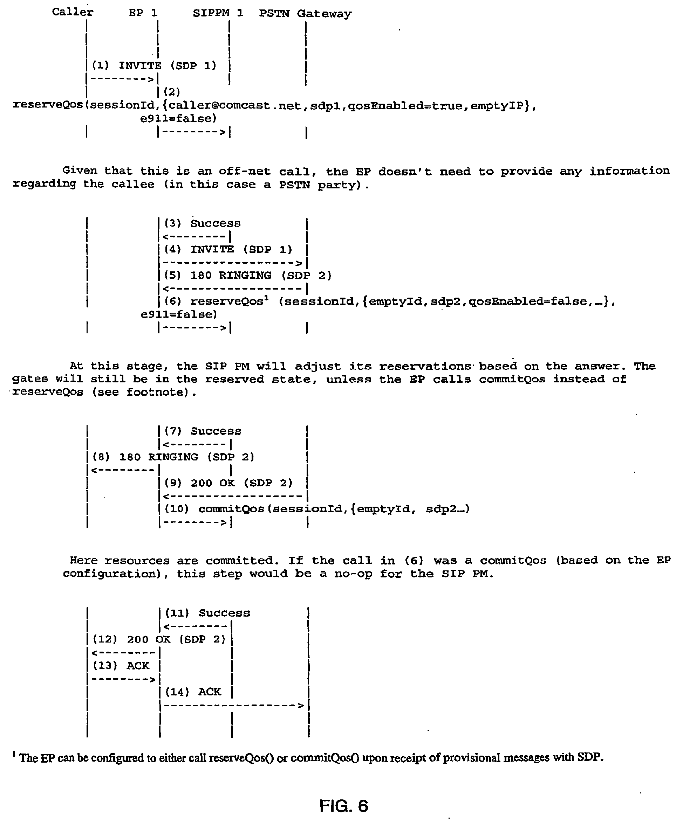

FIG. 6 shows an exemplary call flow diagram for an off-net (i.e., public switched telephone network - PSTN) call. This call flow example shows an outgoing PSTN call, where early dialogs are created. The correspondence with the components shown in FIG. 2 is the same as that described above for FIGs. 4A and 4B.

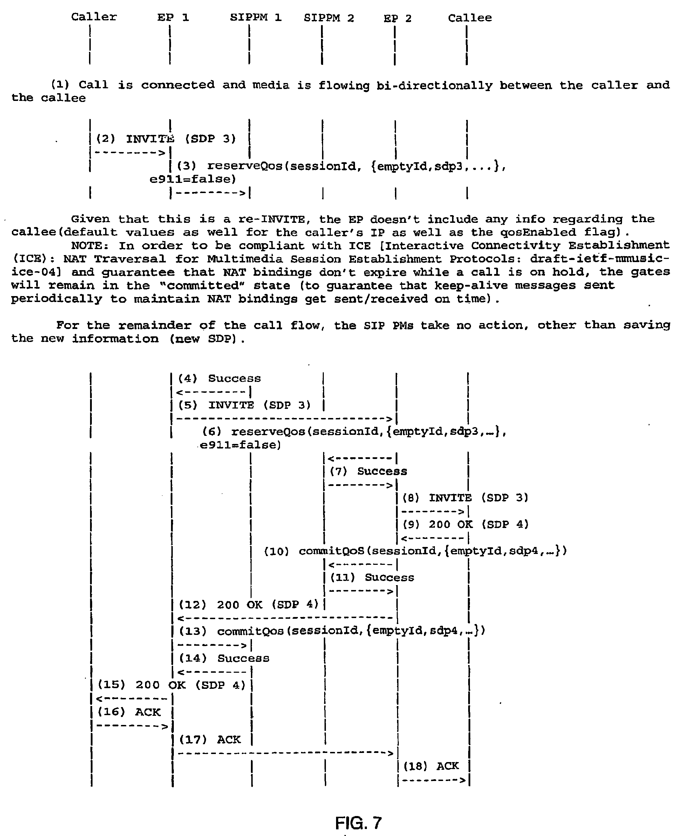

FIG. 7 shows an exemplary call flow diagram for a call hold, after the call has been connected. The correspondence with the components shown in FIG. 2 is the same as that described above for FIGs. 4A and 4B. In this example, after the call had been connected, the caller puts the call on hold, which will result in the caller sending a re-INVITE with a "a=sendonly" attribute at the session level in SDP 3. Another way to put the call on hold could be a 0.0.0.0 address in the connection field. In the answer, the callee replies with SDP 4 containing "a=recvonly" attribute at the session level. Note that the "a=sendonly" attribute could be at the media level, in which case, it will only affect the media to which it belongs.

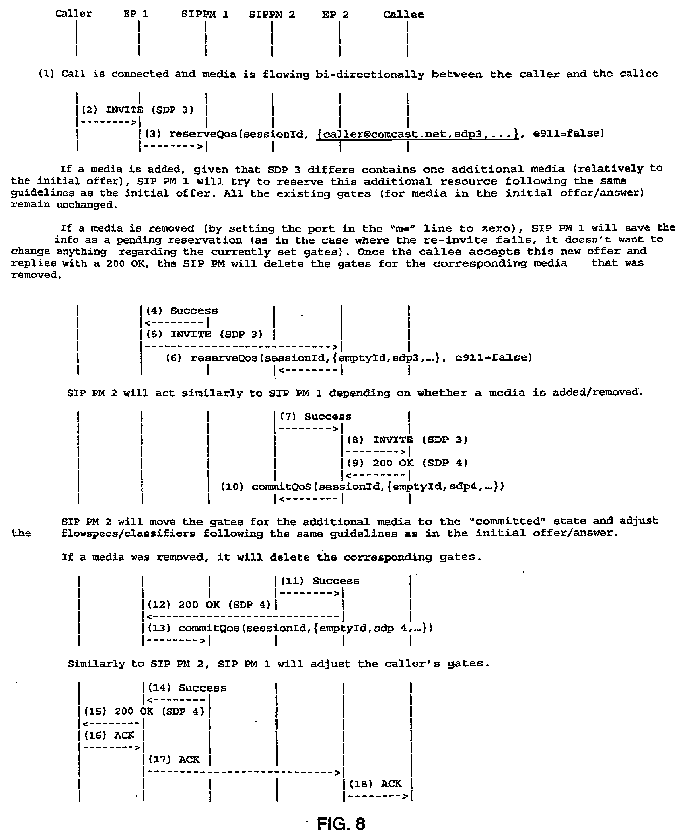

FIGs. 8, 9 and 10 illustrate call flows where re-INVITEs add/remove media, change IP addresses, increase/decrease resource requirements, for example. FIG. 8 shows an exemplary call flow diagram for when media is added/removed successfully. In this case, when the caller re-INVITEs the callee, the call flow diagram covers the case where either a media is added or removed, relative to the initial offer/answer. The correspondence with the components shown in FIG. 2 is the same as that described above for FIGs. 4A and 4B.

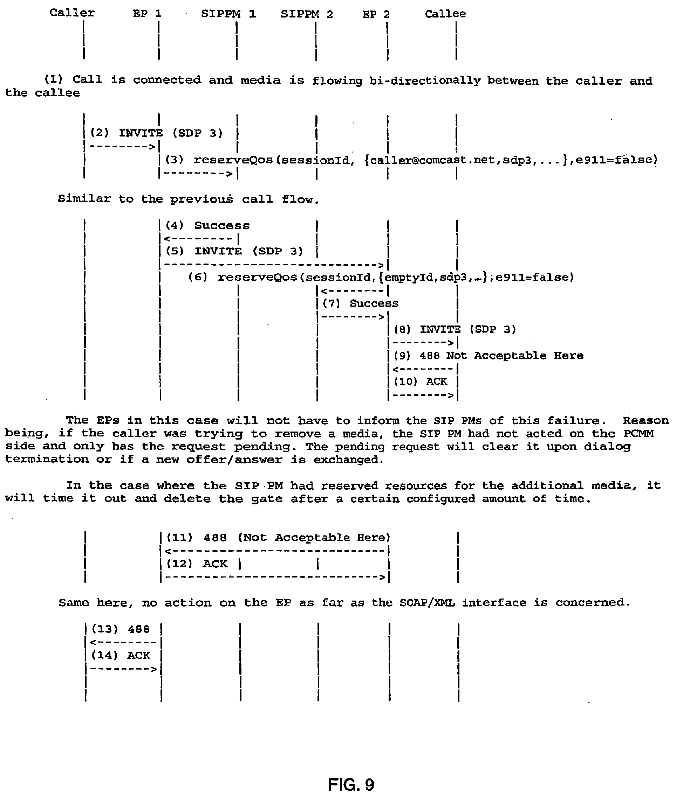

FIG. 9 shows an exemplary call flow diagram for when media is added/removed unsuccessfully. In this case, the callee rejects the new offer by sending a "488" message (Not Acceptable Here). This example shows how the SIP PM handles both cases (i.e., addition and removal of media). The correspondence with the components shown in FIG. 2 is the same as that described above for FIGs. 4A and 4B.

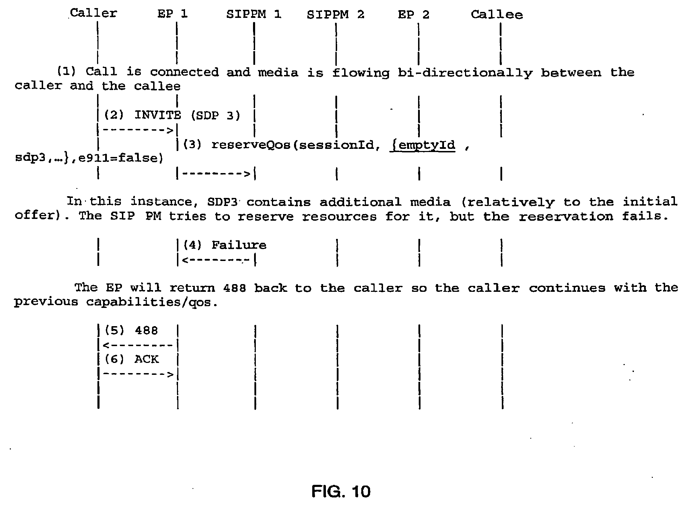

FIG. 10 shows an exemplary call flow diagram for when the additional media requested will not be granted QoS. The correspondence with the components shown in FIG. 2 is the same as that described above for FIGs. 4A and 4B. If an IP address change happens for any media, the relevant SIP PM will delete the gates associated with the media and create new ones with the new address (as long as the address is not 0.0.0.0, which will fall under a special case (hold), or private (refer to section on ICE)).

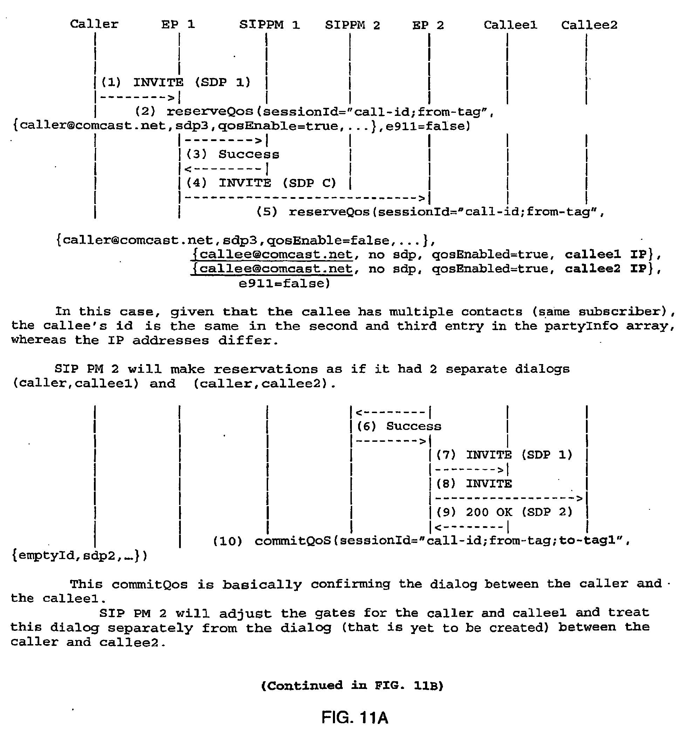

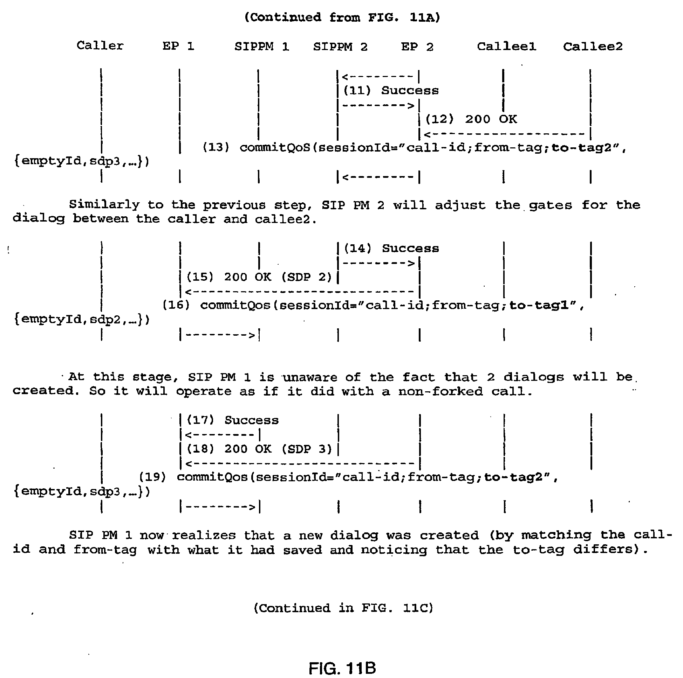

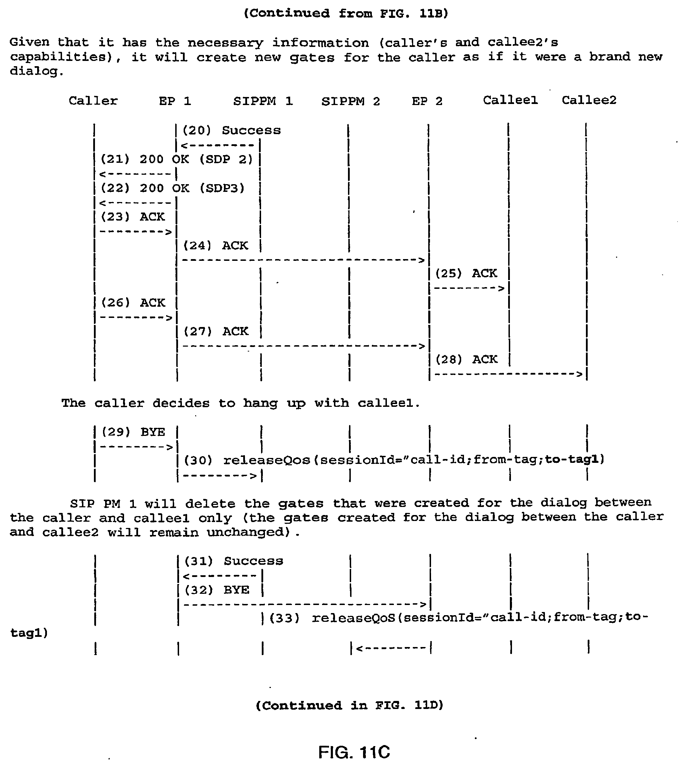

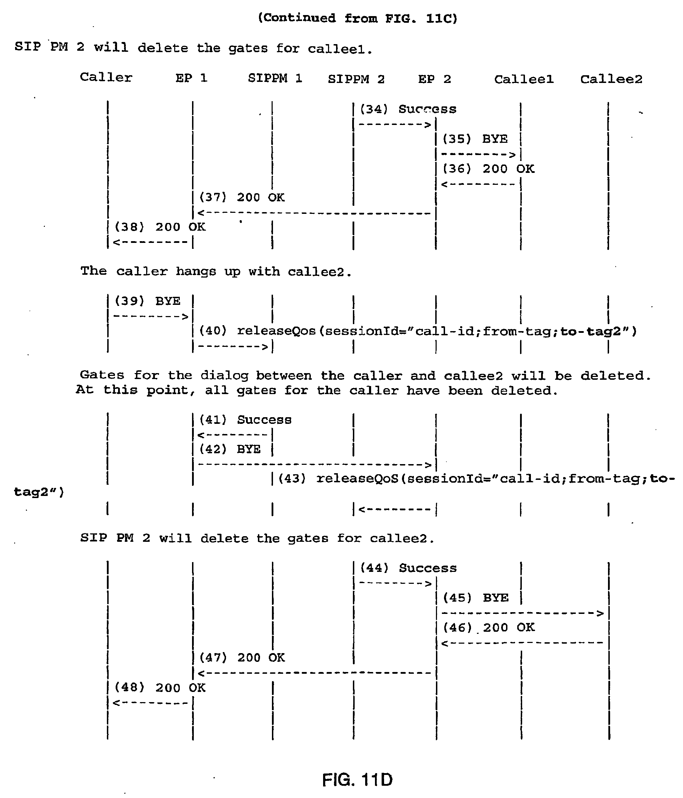

FIG. 11A, 11B, 11C and 11D show an exemplary call flow diagram for forked call, i.e., when the callee has two contacts (callee1 and callee2). The correspondence with the components shown in FIG. 2 is the same as that described above for FIGs. 4A and 4B, except for the addition of a second callee.

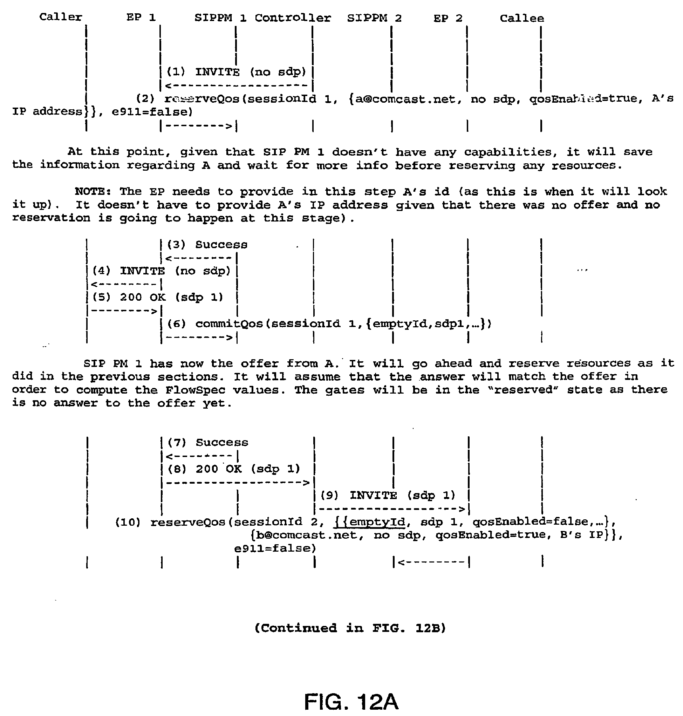

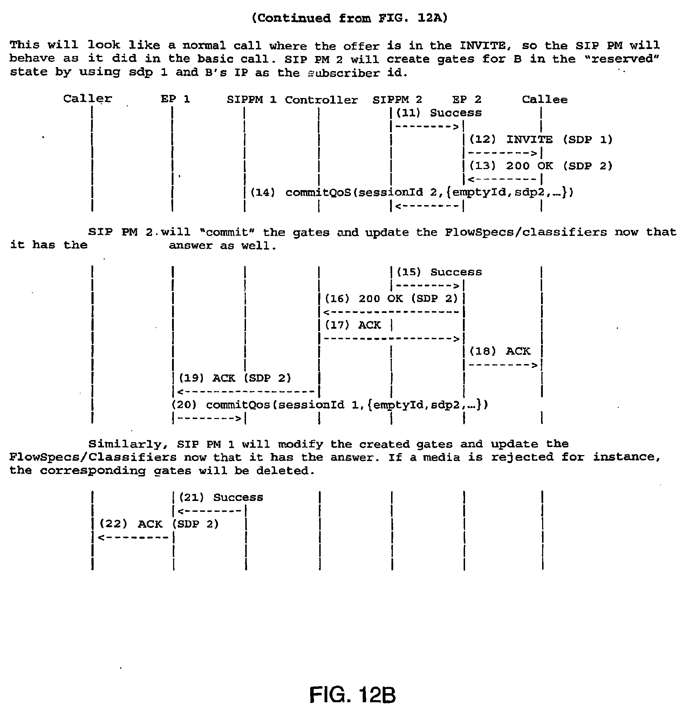

FIGs. 12A and 12B describe how the SIP PM handles 3pcc call flow I, as described in RFC 3725 [Best Current Practices for Third Party Call Control (3pcc) in the Session Initiation Protocol (SIP): IETF RFC 3725]. The difference between this 3pcc call flow, and the ones described in the sections above, is that the offer is sent in the 200 OK instead of the INVITE. The correspondence with the components shown in FIG. 2 is the same as that described above for FIGs. 4A and 4B, except for the addition of a controller, required by the RFC 3725 specification.

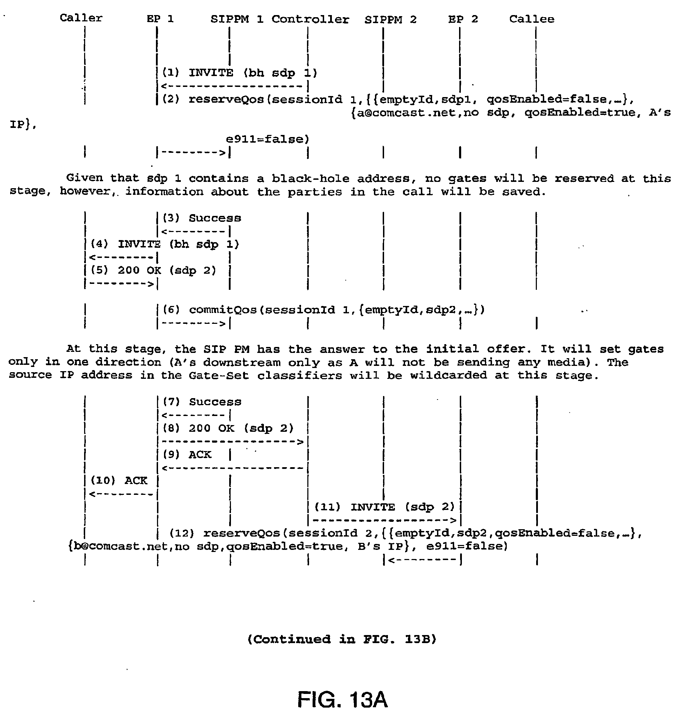

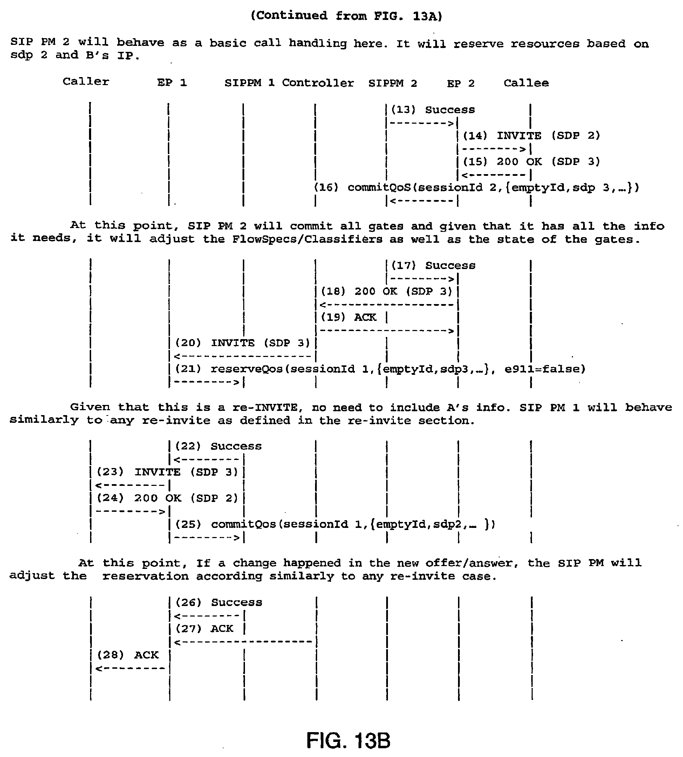

FIGs. 13A and 13B describe how the SIP PM handles 3pcc call flow II, as described in RFC 3725. The correspondence with the components shown in FIG. 2 is the same as that described above for FIGs. 4A and 4B, except for the addition of a controller, required by the RFC 3725 specification. The controller first sends an INVITE to the caller. This is a standard INVITE, containing an offer (sdpl) with a single audio media line, one codec, a random port number (but not zero), and a connection address of 0.0.0.0. This creates an initial media stream that is "black holed," since no media will flow from the caller. The INVITE causes the caller's phone to ring.

When caller1 answers (2), the 200 OK contains an answer, sdp2, with a valid address in the connection line. The controller sends an ACK (4). It then generates a second INVITE (3). This INVITE is addressed to the callee, and it contains sdp2 as the offer to the callee.

This INVITE causes the callee's phone to ring. When it answers, it generates a 200 OK (5) with an answer, sdp3. The controller then generates an ACK (6). Next, it sends a re-INVITE to caller (7) containing sdp3 as the offer.

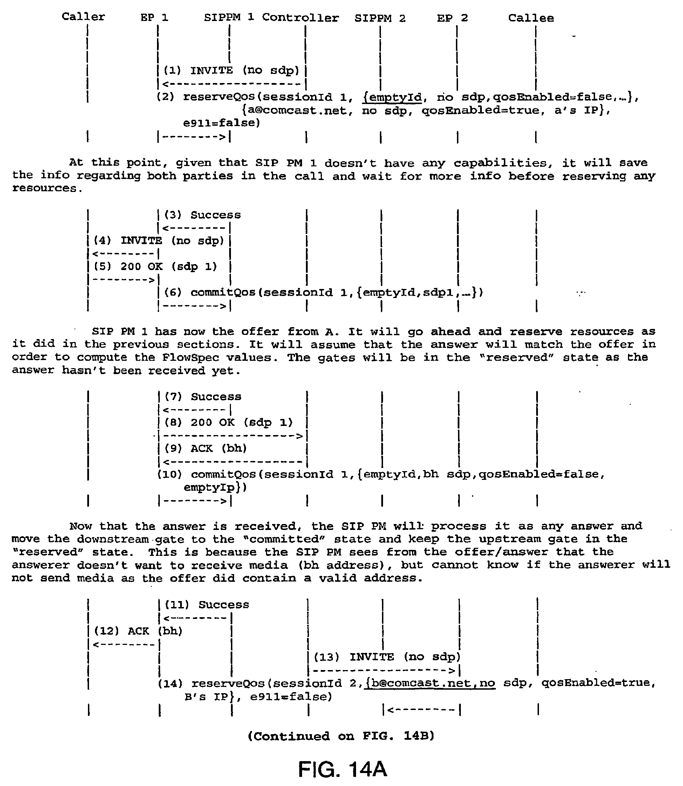

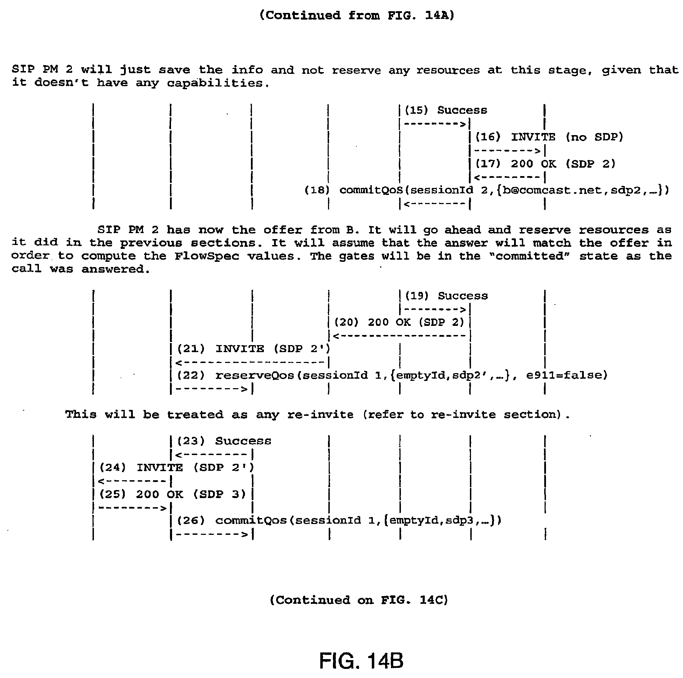

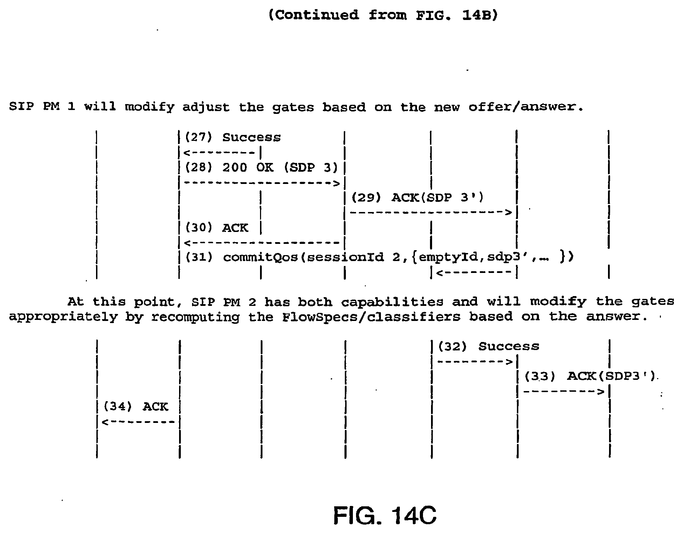

FIGs. 14A, 14B and 14C describe how the SIP PM handles 3pcc call flow III, as described in RFC 3725. The correspondence with the components shown in FIG. 2 is the same as that described above for FIGs. 4A and 4B, except for the addition of a controller, required by the RFC 3725 specification. First, the controller sends an INVITE (1) to the caller without any SDP. The INVITE causes the caller's phone to ring. When the caller answers, the caller generates a 200 OK (2) that contains the caller's offer, offerl. The controller generates an immediate ACK containing an answer (3). This answer is a "black hole" SDP, with its connection address equal to 0.0.0.0.

The controller then sends an INVITE to the callee without SDP (4). This causes the callee's phone to ring. When the callee answers, the callee sends a 200 OK, containing the callee's offer, offer2 (5). This SDP is used to create a re-INVITE back to the caller (6).

The SDP in the 200 OK (7) from the caller, answer2', may also need to be reorganized or trimmed before sending it in the ACK to the callee (8) as answer2. Finally, an ACK is sent to the caller (9), and then media can flow.

For 3pcc call flow IV, as described in RFC 3725, the SIP PM handles the flow in a similar manner to call flow III shown in FIGs. 14A, 14B and 14C. Flow IV includes a variation on Flow III that reduces the flow complexity. The actual message flow is identical, but the SDP placement and construction differs. The initial INVITE (1) contains SDP with no media at all, meaning that there are no m lines. This is valid, and implies that the media makeup of the session will be established later through a re-INVITE (*see*, Session Description Protocol: IETF RFC 2327). Once the INVITE is received, the caller is alerted. When the caller answers the call, the 200 OK (2) has an answer with no media either. This controller acknowledges the answer (3). The flow from this point onward is identical to Flow III as described in FIGs. 14A, 14B and 14C.

Since the only difference with flow III is in the first 3 messages, the the interaction with the SIP PM is the same as Flow III beyond message 3. Before message 3, when the EP receives the INVITE (1), the EP will send a reserveQos request to the SIP PM with the sdp copied from the INVITE. Since there is no media in the SDP, the SIP PM will save the information, but will not reserve any resources. When the answer is revsl ved (2), the SIP PM will as well only update its info and will not reserve any resources as no media is present either.

### ICE interaction

Given that an update to the current ICE draft [see, Interactive Connectivity Establishment (ICE): NAT Traversal for Multimedia Session Establishment Protocols: draft-ietf-mmusic-ice-04] will mandate the endpoints to send a re-INVITE with the chosen candidate and place it in the "c=" line, the SIP PM will not need to understand the new SDP [4] attribute ("candidate") introduced by ICE [6].

If in the re-INVITE the address is a private address (which would be different than the initial address provided in the initial offer/answer exchange), the SIP PM will delete any created gates as it would for a re-INVITE with an IP address change and given that the new address is private, it will not create any new gates.

The invention may be embodied in other specific forms without departing from the essential characteristics thereof. The present embodiments are therefore to be considered in respects as illustrative and not restrictive, the scope of the invention being indicated by the appended claims rather than by the foregoing description, and all changes which come within the meaning and range of the equivalency of the claims are therefore intended to be embraced therein.

## Claims

1. A method of allocating network assets for communication between a first network endpoint (100) and a second network endpoint (102), comprising:
receiving a SIP session initiation invite at a SIP proxy server (110) from the first network endpoint (100) that initiates a call flow between the first network endpoint (100) and the second network endpoint (102) through the set of network assets, wherein the first network endpoint (100) and the second network endpoint (102) use an application residing on an application server (122) to implement the flow;
providing a resource reservation message from the SIP proxy server (110) to a SIP protocol manager (112) as a result of the session initiation invite, wherein the resource reservation message is provided via an application program interface (API), the API including at least one parameter for enabling the SIP proxy server (110) to request quality of service in the access network based on session description protocol parameters, and the API being configured to provide both single-phase and two-phase reserve/commit functionality by providing a reserve QoS function called when the SIP proxy server (110) receives the session initiation invite and used by the SIP protocol manager (112) to initially reserve resources in the access network, a commit QoS function sent to the SIP protocol manager (112) when a called party answers and a terminating proxy server receives an OK message, and a release QoS function for releasing resources for a session called when the SIP proxy server (110) receives a BYE message from one of either the first endpoint (100) or the second endpoint (102); and
providing, from the SIP protocol manager (112), a request message to a policy server (114, 120) to allocate network assets for creating a call flow path connecting the first network endpoint (100) and the second network endpoint (102);
wherein:
the SIP protocol manager (112) maintains the mapping of the network resources allocated with the SIP session, thereby abstracting the need for the application server (122) to maintain state of session to resource mapping;
the policy server (114, 120) includes a first policy server (114) associated with the first network endpoint (100), and a second policy server (120) associated with the second network endpoint (102);
the SIP proxy server (110, 116) includes a first SIP proxy server (110) associated with the first network endpoint (100), and a second SIP proxy server (116) associated with the second network endpoint (102); and
the SIP protocol manager (112, 118) includes a first SIP protocol manager (112) associated with the first network endpoint, and a second SIP protocol manager (118) associated with the second network endpoint;
wherein, in response to a message provided via the API, the SIP protocol manager (112, 118) is configured to return a status code that indicates the success or a failure, and in the event of a failure the reason for the failure, of the API operation; and
the SIP protocol manager (112, 118) is configured to determine, in dependence on a flag in a received message, if a call is an emergency call and to make sure that such a reservation succeeds.

2. The method of claim 1, further including extracting SDP information from the session initiation invite to determine an estimation of required network resources to be allocated.

3. The method of claim 2, wherein the estimation of required network resources includes QoS information.

4. The method of claim 1, wherein the request message to allocate network assets from the SIP protocol manager (112, 118) to the policy server (114, 120) is via a PCMM message, wherein the policy server (110, 116) allocates network resources for the first network endpoint (100) and the second network endpoint (102).

5. The method of claim 1, further including creating, for each network endpoint (100, 102), two PCMM gates for each media type supported, wherein one of the PCMM gates is for upstream communication, and one of the PCMM gates is for downstream communication.

6. The method of claim 1, further including allocating network resources for at least one additional network endpoint, wherein the first network endpoint (100) communicates via a call flow path to the second network endpoint (102) and the at least one additional network endpoint.

7. A system for allocating network assets for communication between a first network endpoint (100) and a second network endpoint (102), comprising:
a SIP proxy server (110) for initiating communication between the first network endpoint (100) and the second network endpoint (102) through the set of network assets, wherein the communication employs an application residing on an application server (122); and
a SIP protocol manager (112) for receiving a resource reservation message from the SIP proxy server (110), as a result of a session initiation invite, wherein the resource reservation message is provided via an application program interface (API), the API including at least one parameter for enabling the SIP proxy server (110) to request quality of service in the access network based on session description protocol parameters, and the API being configured to provide both single-phase and two-phase reserve/commit functionality by providing a reserve QoS function called when the SIP proxy server (110) receives the session initiation invite and used by the SIP protocol manager (112) to initially reserve resources in the access network, a commit QoS function sent to the SIP protocol manager (112) when a called party answers and a terminating proxy server receives an OK message, and a release QoS function for releasing resources for a session called when the SIP proxy server (110) receives a BYE message from one of either the first endpoint (100) or the second endpoint (102), wherein the SIP protocol manager (112) is configured to allocate network assets for creating a call flow path connecting the first network endpoint (100) and the second network endpoint (102);
wherein:
the SIP protocol manager (112) monitors the network resources allocated and maintains a state of the communication between the network endpoints, thereby abstracting the state of the communication from the application server;
the policy server (114) includes a first policy server (114) associated with the first network endpoint (100), and a second policy server (120) associated with the second network endpoint (102);
the SIP proxy server (110, 116) includes a first SIP proxy server (110) associated with the first network endpoint (100), and a second SIP proxy server (116) associated with the second network endpoint (102); and
the SIP protocol manager (112, 118) includes a first SIP protocol manager (112) associated with the first network endpoint (100), and a second SIP protocol manager (118) associated with the second network endpoint (102);
wherein, in response to a message provided via the API, the SIP protocol manager (112, 118) is configured to return a status code that indicates the success or a failure, and in the event of a failure the reason for the failure, of the API operation; and
the SIP protocol manager (112, 118) is configured to determine, in dependence on a flag in a received message, if a call is an emergency call and to make sure that such a reservation succeeds.

8. The system of claim 7, wherein the session initiation invite contains SDP information, and the SIP protocol manager (112, 118) determines an estimation of required network resources to be allocated.

9. The system of claim 8, wherein the estimation of required network resources includes QoS information.

10. The system of claim 7, wherein the SIP protocol manager (112, 118) provides a request to allocate network assets to a policy server via a PCMM message, and wherein the policy server allocates network resources for the first network endpoint (100) and the second network endpoint (102).

11. The system of claim 7, wherein the SIP protocol manager (112, 118), for each network endpoint, creates two PCMM gates for each media type supported, wherein one of the PCMM gates is for upstream communication, and one of the PCMM gates is for downstream communication.

12. The system of claim 7, further including at least one additional network endpoint, wherein the SIP protocol manager (112, 118) allocates network resources for the at least one additional network endpoint, and the first network endpoint (100) communicates via a call flow path to the second network endpoint (102) and the at least one additional network endpoint.

## Patentansprüche

1. Verfahren zur Zuweisung von Netzwerkressourcen zur Kommunikation zwischen einem ersten Netzwerkendpunkt (100) und einem zweiten Netzwerkendpunkt (102), umfassend:
Empfangen einer Aufforderung zu einer SIP-Sitzungseinleitung an einem SIP-Proxy-Server (110) vom ersten Netzwerkendpunkt (100) die einen Anruffluss zwischen dem ersten Netzwerkendpunkt (100) und dem zweiten Netzwerkendpunkt (102) durch den Satz von Netzwerkkomponenten einleitet, wobei der erste Netzwerkendpunkt (100) und der zweite Netzwerkendpunkt (102) eine Anwendung benutzen, die auf einem Anwendungsserver (122) liegt, um den Fluss zu implementieren;
Bereitstellen einer Ressourcen-Reservierungsnachricht vom SIP-Proxy-Server (110) an einen SIP-Protokoll-Manager (112) infolge der Aufforderung zur Sitzungseinleitung, wobei die Ressourcen-Reservierungsnachricht über eine Anwendungsprogrammschnittstelle (API) bereitgestellt wird, die API wenigstens einen Parameter einschließt, um dem SIP-Proxy-Server (110) zu ermöglichen, Dienstgüte im Zugangsnetzwerk, auf Parametern des Sitzungsbeschreibungsprotokolls beruhend, anzufordern, und wobei die API konfiguriert ist, sowohl Einphasen- als auch Zweiphasen-Funktionalität für Reserve/Commit durch Bereitstellen einer Reserve-Dienstgüte-/QoS-Funktion bereitgestellt wird, die gerufen wird, wenn der SIP-Proxy-Server (110) die Aufforderung zur Sitzungseinleitung empfangen hat und vom SIP-Protokoll-Manager (112) verwendet wird, anfänglich Ressourcen im Zugangsnetzwerk zu reservieren, eine Commit-QoS-Funktion, die an den SIP-Protokoll-Manager (112) gesendet wurde, wenn ein gerufener Teilnehmer antwortet und ein Terminierungs-Proxy-Server eine OK-Nachricht empfängt, und eine Freigabe-QoS-Funktion zum Freigeben von Ressourcen für eine Sitzung, die gerufen wurde, wenn der SIP-Proxy-Server (110) eine BYE-Nachricht von entweder dem ersten Endpunkt (100) oder dem zweiten Endpunkt (102) empfängt; und
Bereitstellen, ab dem SIP-Protokoll-Manager (112), einer Anforderungsnachricht an einen Policy-Server (114, 120) Netzwerkressourcen zuzuweisen, um einen Verbindungsablaufweg zu schaffen, der den ersten Netzwerkendpunkt (100) und den zweiten Netzwerkendpunkt (102) verbindet;
wobei:
der SIP-Protokoll-Manager (112) das Mapping der Netzwerkressourcen beibehält, die bei der SIP-Session zugewiesen wurden, dadurch wird die Notwendigkeit abstrahiert, dass der Anwendungsserver (122) den Zustand der Sitzung beibehält, um das Mapping zu ressourcen;
der Policy-Server (114, 120) einen ersten Policy-Server (114), der mit dem ersten Netzwerkendpunkt (100) assoziiert ist und einen zweiten Policy-Server (120) einschließt, der mit dem zweiten Netzwerkendpunkt (102) assoziiert ist;
der SIP-Proxy-Server (110, 116) einen ersten SIP-Proxy-Server (110), der mit dem ersten Netzwerkendpunkt (100) assoziiert ist und einen zweiten SIP-Proxy-Server (116) einschließt, der mit dem zweiten Netzwerkendpunkt (102) assoziiert ist; und
der SIP-Protokoll-Manager (112, 118) einen ersten SIP-Protokoll-Manager (112), der mit dem ersten Netzwerkendpunkt assoziiert ist und einen zweiten SIP-Protokoll-Manager (118) einschließt, der mit dem zweiten Netzwerkendpunkt assoziiert ist;
wobei, als Antwort auf eine Nachricht, die über die API bereitgestellt wurde, der SIP-Protokoll-Manager (112, 118) konfiguriert ist, einen Status-Code zurückzusenden, der den Erfolg oder ein Versagen und im Falle eines Versagens den Grund für das Versagen der API-Operation anzeigt; und
der SIP-Protokoll-Manager (112, 118) konfiguriert ist, in Abhängigkeit von einem Flag in einer empfangenen Nachricht, zu bestimmen, wenn ein Anruf ein Notanruf ist und sicherzustellen, dass eine solche Reservierung erfolgreich ist.

2. Verfahren nach Anspruch 1, das ferner das Extrahieren von **SDP-**Information aus der Aufforderung zur Sitzungseinleitung einschließt, um eine Schätzung erforderlicher zuzuweisender Netzwerkressourcen zu bestimmen.

3. Verfahren nach Anspruch 2, wobei die Schätzung erforderlicher Netzwerkressourcen QoS-Information einschließt.

4. Verfahren nach Anspruch 1, wobei die Anforderungsnachricht zur Zuweisung von Netzwerkressourcen vom SIP-Protokoll-Manager (112, 118) an den Policy-Server (114, 120) über eine PCMM-Nachricht geschieht, wobei der Policy-Server (114, 120) Netzwerkressourcen für den ersten Netzwerkendpunkt (100) und den zweiten Netzwerkendpunkt (102) zuweist.

5. Verfahren nach Anspruch 1, welches ferner das Schaffen, für jeden Netzwerkendpunkt (100, 102), zwei PCMM-Gates für jeden unterstützten Medientyp einschließt, wobei eins der PCMM-Gates für Stromaufwärtskommunikation ist und eins der PCMM-Gates für Stromabwärtskommunikation ist.

6. Verfahren nach Anspruch 1, welches ferner die Zuweisung von Netzwerkressourcen für wenigstens einen zusätzlichen Netzwerkendpunkt einschließt, wobei der erste Netzwerkendpunkt (100) über einen Verbindungsablaufweg zum zweiten Netzwerkendpunkt (102) und dem wenigstens einen zusätzlichen Netzwerkendpunkt kommuniziert.

7. System zur Zuweisung von Netzwerkressourcen zur Kommunikation zwischen einem ersten Netzwerkendpunkt (100) und einem zweiten Netzwerkendpunkt (102), umfassend:
einen SIP-Proxy-Server (110) zum Einleiten von Kommunikation zwischen dem ersten Netzwerkendpunkt (100) und dem zweiten Netzwerkendpunkt (102) durch den Satz von Netzwerkressourcen, wobei die Kommunikation eine Anwendung einsetzt, die auf einem Anwendungsserver (122) liegt; und
einen SIP-Protokoll-Manager (112) zum Empfangen einer Ressourcen-Reservierungsnachricht vom SIP-Proxy-Server (110), infolge einer Aufforderung zur Sitzungseinleitung, wobei die Ressourcen-Reservierungsnachricht über eine Anwendungsprogrammschnittstelle (API) bereitgestellt wird, die API wenigstens einen Parameter einschließt, um dem SIP-Proxy-Server (110) zu ennöglichen, Dienstgüte im Zugangsnetzwerk, auf Parametern des Sitzungsbeschreibungsprotokolls beruhend, anzufordern, und wobei die API konfiguriert ist, sowohl Einphasen- als auch Zweiphasen-Funktionalität für Reserve/Commit durch Bereitstellen einer Reserve-Dienstgüte-/QoS-Funktion bereitzustellen, die gerufen wird, wenn der SIP-Proxy-Server (110) die Aufforderung zur Sitzungseinleitung empfangen hat und vom SIP-Protokoll-Manager (112) verwendet wird, anfänglich Ressourcen im Zugangsnetzwerk zu reservieren, eine Commit-QoS-Funktion, die an den SIP-Protokoll-Manager (112) gesendet wurde, wenn ein gerufener Teilnehmer antwortet und ein Terminierungs-Proxy-Server eine OK-Nachricht empfängt, und eine Freigabe-QoS-Funktion zum Freigeben von Ressourcen für eine Sitzung, die gerufen wurde, wenn der SIP-Proxy-Server (110) eine BYE-Nachricht von entweder dem ersten Endpunkt (100) oder dem zweiten Endpunkt (102) empfängt, wobei der SIP-Protokoll-Manager (112) konfiguriert ist, Netzwerkkomponenten zum Schaffen eines Verbindungsablaufwegs zuzuweisen, der den ersten Netzwerkendpunkt (100) und den zweiten Netzwerkendpunkt (102) verbindet;
wobei:
der SIP-Protokoll-Manager (112) die zugewiesenen Netzwerkressourcen überwacht und einen Zustand der Kommunikation zwischen den Netzwerkendpunkten beibehält, dadurch wird der Zustand der Kommunikation vom Anwendungsserver abstrahiert;
der Policy-Server (114) schließt einen ersten Policy-Server (114), der mit dem ersten Netzwerkendpunkt (100) assoziiert ist, und einen zweiten Policy-Server (120) ein, der mit dem zweiten Netzwerkendpunkt (102) assoziiert ist;
der SIP-Proxy-Server (110, 116) einen ersten SIP-Proxy-Server (110), der mit dem ersten Netzwerkendpunkt (100) assoziiert ist und einen zweiten SIP-Proxy-Server (116) einschließt, der mit dem zweiten Netzwerkendpunkt (102) assoziiert ist; und
der SIP-Protokoll-Manager (112, 118) einen ersten SIP-Protokoll-Manager (112), der mit dem ersten Netzwerkendpunkt (100) assoziiert ist und einen zweiten SIP-Protokoll-Manager (118) einschließt, der mit dem zweiten Netzwerkendpunkt (102) assoziiert ist;
wobei, als Antwort auf eine Nachricht, die über die API bereitgestellt wurde, der SIP-Protokoll-Manager (112, 118) konfiguriert ist, einen Status-Code zurückzusenden, der den Erfolg oder ein Versagen und im Falle eines Versagens den Grund für das Versagen der API-Operation anzeigt und;
der SIP-Protokoll-Manager (112, 118) konfiguriert ist, in Abhängigkeit von einem Flag in einer empfangenen Nachricht, zu bestimmen, wenn ein Anruf ein Notanruf ist und sicherzustellen, dass eine solche Reservierung erfolgreich ist.

8. System nach Anspruch 7, wobei die Aufforderung zur Sitzungseinleitung SDP-Information enthält, und der SIP-Protokoll-Manager (112, 118) eine Schätzung der erforderlichen zuzuweisenden Netzwerkressourcen bestimmt.

9. System nach Anspruch 8, wobei die Schätzung erforderlicher Netzwerkressourcen QoS-Information einschließt.

10. System nach Anspruch 7, wobei der SIP-Protokoll-Manager (112, 118) eine Anforderung bereitstellt, Netzwerkkomponenten einem Policy-Server über eine PCMM-Nachricht zuzuweisen, und wobei der Policy-Server Netzwerkressourcen für den ersten Netzwerkendpunkt (100) und den zweiten Netzwerkendpunkt (102) zuweist.

11. System nach Anspruch 7, wobei der SIP-Protokoll-Manager (112, 118), für jeden Netzwerkendpunkt, zwei PCMM-Gates für jeden unterstützten Medientyp schafft, wobei eins der PCMM-Gates für Stromaufwärtskommunikation ist und eins der PCMM-Gates für Stromabwärtskommunikation ist.

12. System nach Anspruch 7, das ferner wenigstens einen zusätzlichen Netzwerkendpunkt einschließt, wobei der SIP-Protokoll-Manager (112, 118) Netzwerkressourcen für den wenigstens einen zusätzlichen Netzwerkendpunkt zuweist, und der erste Netzwerkendpunkt (100) über einen Verbindungsablaufweg zum zweiten Netzwerkendpunkt (102) und dem wenigstens einen zusätzlichen Netzwerkendpunkt kommuniziert.

## Revendications

1. Procédé permettant d'attribuer des équipements de réseau à des fins de communication entre un premier point terminal de réseau (100) et un deuxième point terminal de réseau (102), comportant :
l'étape consistant à recevoir une invitation d'initialisation de session à protocole SIP au niveau d'un serveur mandataire à protocole SIP (110) depuis le premier point terminal de réseau (100) qui initialise un flux d'appels entre le premier point terminal de réseau (100) et le deuxième point terminal de réseau (102) par le biais de l'ensemble d'équipements de réseau, dans lequel le premier point terminal de réseau (100) et le deuxième point terminal de réseau (102) utilisent une application résidant sur un serveur d'applications (122) à des fins de mise en oeuvre du flux ;
l'étape consistant à fournir un message de réservation de ressource en provenance du serveur mandataire à protocole SIP (110) à un gestionnaire à protocole SIP (112) à la suite de l'invitation d'initialisation de session, dans lequel le message de réservation de ressource est fourni par le biais d'une interface API (application program interface - interface de programme d'application), l'interface API comprenant au moins un paramètre permettant au serveur mandataire à protocole SIP (110) de demander la qualité de service dans le réseau d'accès en fonction de paramètres à protocole de description de session, et l'interface API étant configurée pour fournir à la fois la fonctionnalité de réservation/validation à une phase et à deux phases en fournissant une fonction de qualité de service de réservation appelée quand le serveur mandataire à protocole SIP (110) reçoit l'invitation d'initialisation de session et utilisée par le gestionnaire à protocole SIP (112) pour réserver initialement des ressources dans le réseau d'accès, une fonction de qualité de service de validation envoyée au gestionnaire à protocole SIP (112) quand un appelé répond et qu'un serveur mandataire de terminaison reçoit un message OK, et une fonction de qualité de service de libération pour libérer des ressources pour une session appelée quand le serveur mandataire à protocole SIP (110) reçoit un message BYE en provenance de l'un quelconque parmi soit le premier point terminal (100) soit le deuxième point terminal (102) ; et
l'étape consistant à fournir, en provenance du gestionnaire à protocole SIP (112), un message de demande à un serveur de règles (114, 120) à des fins d'attribution d'équipements de réseau afin de créer une voie d'acheminement de flux d'appels reliant le premier point terminal de réseau (100) et le deuxième point terminal de réseau (102) ;
dans lequel :
le gestionnaire à protocole SIP (112) maintient la mise en correspondance des ressources du réseau attribuées avec la session à protocole SIP, pour de ce fait faire abstraction de tout besoin qu'a le serveur d'applications (122) de maintenir l'état de session à des fins de mise en correspondance des ressources ;
le serveur de règles (114, 120) comprend un premier serveur de règles (114) associé au premier point terminal de réseau (100), et un deuxième serveur de règles (120) associé au deuxième point terminal de réseau (102) ;
le serveur mandataire à protocole SIP (110, 116) comprend un premier serveur mandataire à protocole SIP (110) associé au premier point terminal de réseau (100), et un deuxième serveur mandataire à protocole SIP (116) associé au deuxième point terminal de réseau (102) ; et
le gestionnaire à protocole SIP (112, 118) comprend un premier gestionnaire à protocole SIP (112) associé au premier point terminal de réseau, et un deuxième gestionnaire à protocole SIP (118) associé au deuxième point terminal de réseau ;
dans lequel, en réponse à un message fourni par le biais de l'interface API, le gestionnaire à protocole SIP (112, 118) est configuré pour renvoyer un code de statut qui indique le succès ou un échec, et en cas d'échec la raison de l'échec, de l'opération de l'interface API ; et
le gestionnaire à protocole SIP (112, 118) est configuré pour déterminer, en fonction d'un drapeau dans un message reçu, si un appel est un appel d'urgence et pour faire en sorte qu'une telle réservation aboutit avec succès.

2. Procédé selon la revendication 1, comprenant par ailleurs l'étape consistant à extraire des informations à protocole SDP (session description protocol - protocole de description de session) en provenance de l'invitation d'initialisation de session pour déterminer une estimation des ressources de réseau requises devant être attribuées.

3. Procédé selon la revendication 2, dans lequel l'estimation des ressources de réseau requises comprend des informations de qualité de service.

4. Procédé selon la revendication 1, dans lequel le message de demande d'attribution d'équipements de réseau en provenance du gestionnaire à protocole SIP (112, 118) au serveur de règles (114, 120) se fait par le biais d'un message à protocole PCMM (packet cable multimedia - multimédia à câble par paquets), dans lequel le serveur de règles (114, 120) attribue des ressources de réseau pour le premier point terminal de réseau (100) et le deuxième point terminal de réseau (102).

5. Procédé selon la revendication 1, comprenant par ailleurs l'étape consistant à créer, pour chaque point terminal de réseau (100, 102), deux portails à protocole PCMM pour chaque type de média pris en charge, dans lequel l'un des portails à protocole PCMM est destiné à des fins de communication en amont, et l'un des portails à protocole PCMM est destiné à des fins de communication en aval.

6. Procédé selon la revendication 1, comprenant par ailleurs l'étape consistant à attribuer des ressources de réseau pour au moins un point terminal de réseau supplémentaire, dans lequel le premier point terminal de réseau (100) communique par le biais d'une voie d'acheminement de flux d'appels jusqu'au deuxième point terminal de réseau (102) et jusqu'audit au moins un point terminal de réseau supplémentaire.

7. Système permettant d'attribuer des équipements de réseau à des fins de communication entre un premier point terminal de réseau (100) et un deuxième point terminal de réseau (102), comportant :
un serveur mandataire à protocole SIP (110) servant à initialiser une communication entre le premier point terminal de réseau (100) et le deuxième point terminal de réseau (102) par le biais de l'ensemble d'équipements de réseau, dans lequel la communication utilise une application résidant sur un serveur d'applications (122) ; et
un gestionnaire à protocole SIP (112) servant à recevoir un message de réservation de ressource en provenance du serveur mandataire à protocole SIP (110), à la suite d'une invitation d'initialisation de session, dans lequel le message de réservation de ressource est fourni par le biais d'une interface API (application program interface - interface de programme d'application), l'interface API comprenant au moins un paramètre permettant au serveur mandataire à protocole SIP (110) de demander la qualité de service dans le réseau d'accès en fonction de paramètres à protocole de description de session, et l'interface API étant configurée pour fournir à la fois la fonctionnalité de réservation/validation à une phase et à deux phases en fournissant une fonction de qualité de service de réservation appelée quand le serveur mandataire à protocole SIP (110) reçoit l'invitation d'initialisation de session et utilisée par le gestionnaire à protocole SIP (112) pour réserver initialement des ressources dans le réseau d'accès, une fonction de qualité de service de validation envoyée au gestionnaire à protocole SIP (112) quand un appelé répond et qu'un serveur mandataire de terminaison reçoit un message OK, et une fonction de qualité de service de libération pour libérer des ressources pour une session appelée quand le serveur mandataire à protocole SIP (110) reçoit un message BYE en provenance de l'un quelconque parmi soit le premier point terminal (100) soit le deuxième point terminal (102), dans lequel le gestionnaire à protocole SIP (112) est configuré à des fins d'attribution d'équipements de réseau afin de créer une voie d'acheminement de flux d'appels reliant le premier point terminal de réseau (100) et le deuxième point terminal de réseau (102) ;
dans lequel :
le gestionnaire à protocole SIP (112) surveille les ressources de réseau attribuées et maintient un état de communication entre les points terminaux de réseau, pour de ce fait faire abstraction de l'état de communication en provenance du serveur d'applications ;
le serveur de règles (114) comprend un premier serveur de règles (114) associé au premier point terminal de réseau (100), et un deuxième serveur de règles (120) associé au deuxième point terminal de réseau (102) ;
le serveur mandataire à protocole SIP (110, 116) comprend un premier serveur mandataire à protocole SIP (110) associé au premier point terminal de réseau (100), et un deuxième serveur mandataire à protocole SIP (116) associé au deuxième point terminal de réseau (102) ; et
le gestionnaire à protocole SIP (112, 118) comprend un premier gestionnaire à protocole SIP (112) associé au premier point terminal de réseau (100), et un deuxième gestionnaire à protocole SIP (118) associé au deuxième point terminal de réseau (102) ;
dans lequel, en réponse à un message fourni par le biais de l'interface API, le gestionnaire à protocole SIP (112, 118) est configuré pour renvoyer un code de statut qui indique le succès ou un échec, et en cas d'échec la raison de l'échec, de l'opération de l'interface API ; et
le gestionnaire à protocole SIP (112, 118) est configuré pour déterminer, en fonction d'un drapeau dans un message reçu, si un appel est un appel d'urgence et pour faire en sorte qu'une telle réservation aboutit avec succès.

8. Système selon la revendication 7, dans lequel l'invitation d'initialisation de session contient des informations à protocole SDP et le gestionnaire à protocole SIP (112, 118) détermine une estimation des ressources de réseau requises devant être attribuées.

9. Système selon la revendication 8, dans lequel l'estimation des ressources de réseau requises comprend des informations de qualité de service.

10. Système selon la revendication 7, dans lequel le gestionnaire à protocole SIP (112, 118) fournit une demande d'attribution d'équipements de réseau à un serveur de règles par le biais d'un message à protocole PCMM, et dans lequel le serveur de règles attribue des ressources de réseau pour le premier point terminal de réseau (100) et le deuxième point terminal de réseau (102).

11. Système selon la revendication 7, dans lequel le gestionnaire à protocole SIP (112, 118), pour chaque point terminal de réseau, crée deux portails à protocole PCMM pour chaque type de média pris en charge, dans lequel l'un des portails à protocole PCMM est destiné à des fins de communication en amont, et l'un des portails à protocole PCMM est destiné à des fins de communication en aval.

12. Système selon la revendication 7, comprenant par ailleurs au moins un point terminal de réseau supplémentaire, dans lequel le gestionnaire à protocole SIP (112, 118) attribue des ressources de réseau pour ledit au moins un point terminal de réseau supplémentaire, et le premier point terminal de réseau (100) communique par le biais d'une voie d'acheminement de flux d'appels jusqu'au deuxième point terminal de réseau (102) et jusqu'audit au moins un point terminal de réseau supplémentaire.
